# EUROPEAN PATENT APPLICATION

(11) **EP 0 793 906 A2**
(43) Date of publication of application: **10.09.1997**
(21) Application number: 97201523.4
(22) Date of filing: 22.12.1992
(51) Int. Cl.: A01B 33/14

(54) **A rotary harrow**

(30) Priority: 23.12.1991 NL 9102164
(62) Divisional of application: 92204049.8
(71) Applicant: C. van der Lely N.V., NL-3155 PD Maasland (NL)
(72) Inventor: van der Lely, Cornelis, 6300 Zug (CH)
(74) Representative: Mulder, Herman

(57) **Abstract**

A rotary harrow having transversely to the direction of operative travel a plurality of soil working members (5) which are rotatable about upwardly extending axes and include at least one carrier (27) with two tines (24) mounted thereon, each tine (24) being mounted by means of a bolt (25) and a nut, projections (26) being provided on the carrier on both sides of the bolt (25) for locking said tine (24) to the carrier (27), wherein a cross-sectional view through the centre line of carrier the bolts (25) make an obtuse angle to one another which is opened in an upward direction, and the inner sides (27A) of the carrier (27) on which the nuts of the bolts (25) are pressing, are making a sharp angle to one another, opened in a downward direction.

## Description

The invention relates to a rotary harrow having transversely to the direction of operative travel a plurality of soil working members which are rotatable about upwardly extending axes and include at least one carrier with two tines mounted thereon, each tine being mounted by means of a bolt and a nut, projections being provided on the carrier on both sides of the bolt for locking said tine to the carrier.

A rotary harrow of this kind is described in the European Patent Specification 0 250 055.

In this patent is described a rotary harrow having a tine carrier to which the bolts for fixing the tines extend perpendicular to the driving axle of the carrier and are situated co-axially.

The aim of the invention is to improve the tine carrier and the tine fixation.

According to the invention make in a cross-sectional view through the centre line of the carrier the bolts an obtuse angle to one another which is opened in an upward direction, and the inner sides of the carrier on which the nuts of the bolts are pressing, are making a sharp angle to one another, opened in a downward direction.

This construction has the advantages that the nuts of the bolts at the inner side of the carrier are better accessible.

Moreover it is found that under certain circumstances it is advantageous to have the tines itselves extending somewhat side-ways and this can be easily obtained with the construction of the invention.

According to a further development of the above described invention the contact surfaces by which the tines are in contact with the carrier encloses a sharp angle which is opened in a downward direction.

According to a further advantageous development of the invention the bolts have heads which are able to press against surfaces of the bulging portions of the tines when mounted to the carrier, these surfaces making an angle to one another which is opened in a downward direction.

According to a further advantageous development of the invention the tines have on the upper part of the bulging portion a top surface which encloses a smaller angle with the bolt than the lower surface of the bulging portion near the working part of the tine.

With this construction it is obtained that less soil will stick to the top of the tines, which top is close to the underside of a gear box for rotating the tines.

According to a further advantageous construction the nuts at the inner side of the carrier are provided with a cup-shaped envelope.

Due to the specific construction of the carrier it is easily possible to arrange the cup-shaped envelopes at the inner side of the carrier.

For a better understanding of the invention and to show how the same may be carried into effect, reference will now be made by way of example to the accompanying drawings, in which:
Figure 1 is a plan view of an agricultural machine, more specifically a p.t.o.-driven rotary harrow, in which the invention is applied;
Figure 2 shows a first embodiment and is a cross-sectional view taken on the line II-II in Figure 1;
Figure 3 is a first alternative embodiment of a detail of the cross-sectional view of Figure 2;
Figure 4 is a second alternative embodiment of a detail of the cross-sectional view of Figure 2;
   Corresponding component parts in the drawings are given the same reference numerals. In addition, the invention is in no way limited to the embodiments shown and described here; they only serve by way of illustration of the inventive idea.

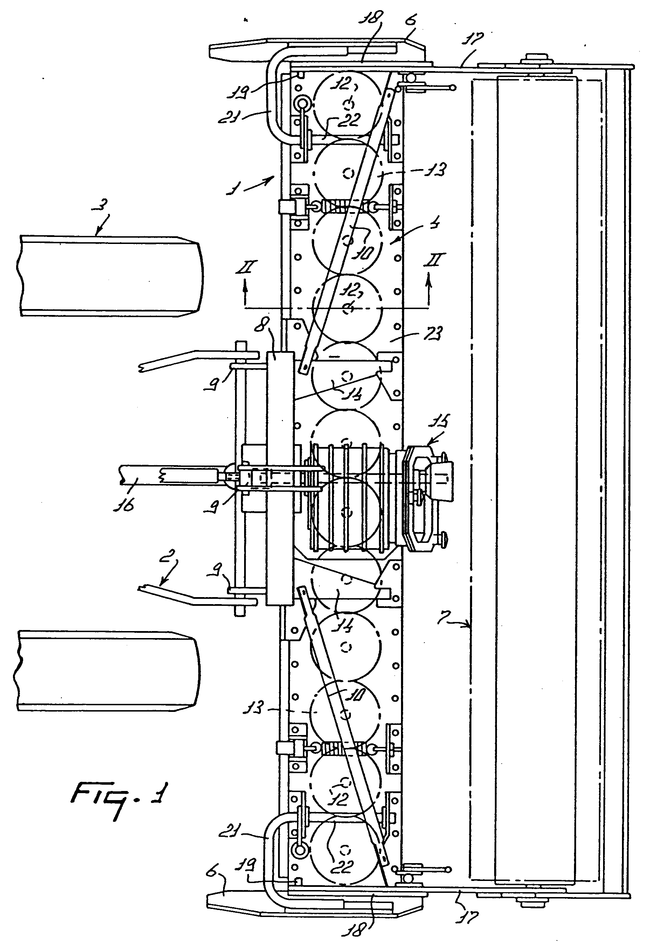

The agricultural machine 1 in Figure 1 is a p.t.o.-driven rotary harrow in the state in which it is coupled to the three-point lifting hitch 2 of a tractor 3. The rotary harrow 1 has a hollow frame beam 4 which supports working members 5 or, put differently, soil cultivating members 5, the frame beam 4 being provided at its ends with side plates 6 and at its rear side with a roller 7. In its midway point, the frame beam is provided at its upper side with a trestle 8 having coupling beams 9 for coupling the harrow to the three-point lifting hitch of a tractor. On either side, the trestle 8 is connected to the end of the frame beam 4 via a strut 10, so that the trestle 8, the struts 10 and the frame beam 4 form a solid framework. The working members 5, in the present example soil cultivating members which are located for a large part beyond the bottom side of the frame beam 4, are each rotatable about a shaft 12 which is bearing-supported relative to the frame beam 4. A gearwheel 15 is attached to that portion of this shaft that extends to inside the frame beam 4. Therefore, the hollow frame beam 4 is alternatively denoted gear box 4. The gearwheels 13 of the soil cultivating members 5 are in mesh in the gear box 4. In the embodiment shown in Figure 1, the p.t.o.-driven rotary harrow has a width of three metres and is fitted with twelve gearwheels 13 arranged transversely to the direction of operative travel.

A transmission box 15 is positioned between the legs 14 of the trestle 8 at the upper side of the frame beam 4. This box is in connection through an aperture in the gear box 4 with the extension of the shaft 12 of one of the middlemost two soil cultivating members 5. At the leading side, the gear box 15 is connected to the power take-off shaft of the tractor 3 via a coupling shaft 16. The driving motion thereof is transferred in the transmission box 15 via a right-angle gearwheel transmission to the shaft 12, which is bearing-supported in the frame beam 4, of the working members 5. The roller 7 at the rear side of the frame beam 4 is connected to the box 4 via a pair of arms 17. The connection is constituted by a stub axle 19 which is provided at the leading and upper side of the frame beam 4 against an end plate 18 and about which the arms 17 can pivot. The end plate 18 which closes the ends of the frame beam 4 is arranged such that it extends in the vertical direction and above the frame beam 4, so that a guide means for the possible motions of the arms 17 of the roller 8 is created. The side plates 6 alternatively denoted "soil guide plates", are pivotal by means of an arm 21 relative to the pivot shaft 22 positioned at the upper side of the frame beam 4.

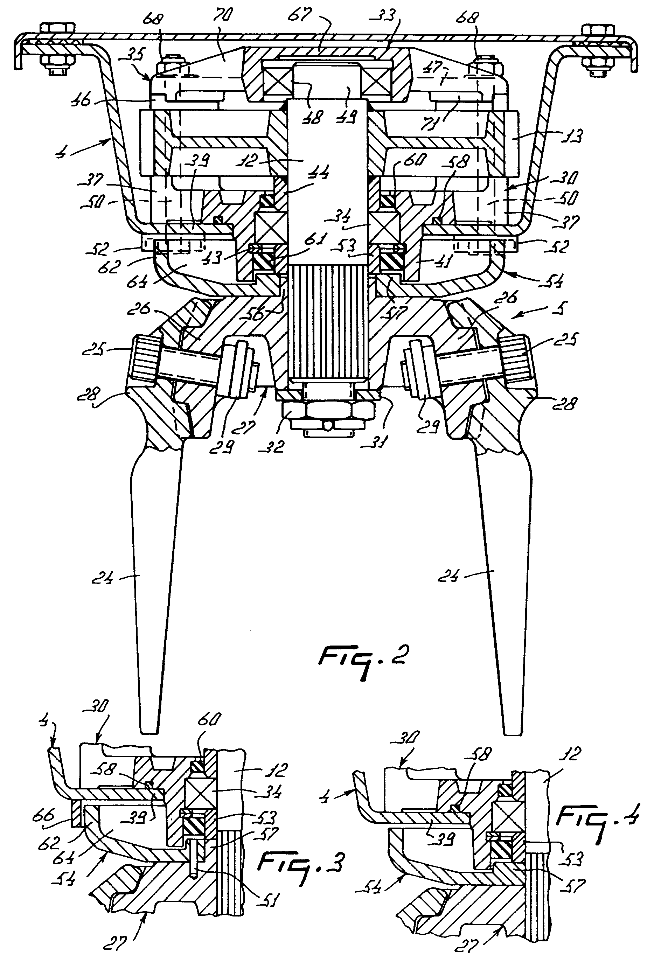

Figure 2, which is a partly cross-sectional view through the frame beam 4 and the soil cultivating members 5, shows at the bottom side a soil cultivating member 5 formed by tines 24 which via bolts 25 and with the aid of recessed portions, which fit over a projection 26 of a tine carrier 27, are connected to a tine carrier 17. The head of the bolt 25 is of the hexagon-socket type, so that the edges of application of tools cannot wear off. A further protection against wear by friction with the soil is obtained by a bulging portion 28 of the tine 24, which bulging portion 28 encompasses the bolt head at least at the bottom side and the leading and rear sides. The associated nut is protected by means of a cup-shaped envelope 29, which is pushed over the bolt through a bore in the bottom of the sleeve and is clamped tight by the nut. The tine carrier 27 is disposed on the lower end of the shaft 12 by means of key ways, alternatively denoted "splines". The carrier 27 is supported with the aid of a ring 31 and a lock nut 21 provided over the reduced threaded end of the shaft 12.

The shaft 12 itself is supported via a bearing 34 by a bearing housing 35 in the frame beam 4. The bearing housing consists of a lower part 30 and an upper part 33. The parts are removable from each other in the axial direction. As is shown in Figures 5 and 8, the bearing housing 35 comprises, positioned around and near, respectively, the shaft a circular central portion 36 and 67, respectively, to which four radiating points 37, 47 are attached in the form of a star. The lower bearing housing 30 bears with its central portion 36 and with contact planes 38 at the ends of radiating points 37 on the bottom plate 39 of the trough-shaped frame beam 4. The first part 36 of the bearing housing 35 is provided with a boss-like lower end 41 which at some distance protrudes about the shaft 12 through the bottom plate 39 of the gear box 4. The protruding portion of the bearing housing 35 is provided at some distance below the bottom plate 39 of the gear box 4 with a nick 42, in which two locking washers 43 are located. The outer ring of the bearing 34, the central portion of which is arranged at the level of the bottom plate 39 of the gear box 4, bears on these washers 43.

A collar surface of the relevant gearwheel 13 bears on the inner ring of the bearing 34 via a spacer ring 44 which tightly fits around the shaft. This gearwheel 13 is fused to the shaft 12 via welded seams. As a result thereof, in addition to the gearwheel 13, also the shaft 12 and the soil cultivating member 5 ultimately bear on the bearing 34. The protruding portions of the lower bearing housing part 30 extend just beyond the periphery of a gearwheel 13 in the upward direction and reaches to a small distance above a gearwheel 13. The second part 33 of the bearing housing bears on the upper end of the upwardly directed portion 46 of the protruding portions 37, also via protruding portions 47. The second part 33 of the bearing housing supports the end of the shaft 12 via a second bearing 48. In this situation, the second bearing is arranged about a reduced portion 49 of the shaft 12. The second part 33 of the bearing housing is connected to the first part 30 and to the bottom 39 of the gear box 4 by means of a bolt 50, which is passed from the bottom side of the gear box through holes in the bottom plate 39, the upright portion 46 of a protrusion 37 and through a protruding portion 47 of the second part 33 of the bearing housing. The bolt head located outside the box 4 is protected by means of a cup-shaped envelope 52 in a manner already described hereinbefore from wear by the flow of earth created under the gear box during operation. The cup-shaped envelopes 52 are in this case also applied to increase the stiffness of the bottom plate 39. Because of the distance of the bolt 50 relative to the bore of the box 4 for the shaft 12, or by the length of a protruding portion 37, a wall of the gear box is loaded to a relatively small extent. An additional advantageous fact is that the planes of contact 38 of the bearing housings are outside the periphery of a gearwheel.

Provided at the bottom side of the inner ring of the lower bearing 34 at the upper side of the carrier 27 of the soil cultivating member 5 are a spacer ring 53 and a protective washer 54 about the shaft 12. The locking nut 32 at the bottom side of the shaft 12 can be tightened such that the tine carrier 27, the protective washer 54, the lower spacer ring 53, the first bearing 34 and the upper spacer ring 44 around the shaft 12 are clamped between the gearwheel 13 and the locking nut 32.

Near the periphery of the shaft 12, the carrier 27 is provided with an upright edge 56, around which the protective washer 54 bears on the carrier 27. The height of this edge 56 is less than the height of the protective washer 54 which in situ is provided with a thickened portion which extends in the radial direction to as far as the inner edge of the boss 41 of the bearing housing 35, which boss passes through said box. The thickness of the lower spacer ring 53 exceeds the thickness of the upright edge 56 on the carrier 27, so that the spacer ring 53 bears on the inner edge 57 of the protective washer 54. The upper outer edge of this spacer ring 53 is bevelled, so that the width of the plane on which the inner ring of the bearing 34 bears is at least not larger than the width of the inner ring of the bearing 34. This reduces the risk of contact of the lower spacer ring with a rotary portion of the bearing 34. The lower side of the upper spacer ring 44 is bevelled in a similar manner. At its upper side, the upper spacer ring 44 is provided at the edge facing the shaft with a second bevel for the welded seam between gearwheel 13 and shaft 12.

The gear box, which for its proper operation is at least partly filled with a lubricant, is at its bottom side protected from leakage by a rubber O-ring 58 between bottom plate 39 and bearing housing 35 and by two oil sealing rings 60, 61. The rubber ring 58 is accommodated in a nick 59 in the central portion of the lower bearing housing 30 approximately halfway between the vertical connection between bottom plate 39 and boss 41 and the outer edge of the central portion 36 of the lower bearing housing 30. The upper oil sealing ring 60 is disposed above the bearing 34 between the spacer ring 44 and the bearing housing 30. The lower oil sealing ring 61 is disposed at the bottom side of the lock rings 43 between the boss 41 of the bearing housing and the lower spacer ring 53. A further oil seal of the box 4 is provided by a rubber strip disposed between the cover plate 73 and the trough-like portion of the box 4.

In the present embodiment, the washer 54 has, in a cross-sectional view, from the edge of a central aperture for the shaft 2 to the outside, a flat and approximately horizontally extending portion which bears on the carrier 27 and an obliquely upwardly extending portion having a width approximately equal to the flat portion. In the present embodiment, the angle of the oblique portion is approximately 30°. At the end of the washer, the oblique portion merges into an upright portion 62 whose edge is substantially contiguous to the bottom of the gear box 4. The washer 54 is preferably dimensioned such that the upright portion 62 extends to beyond the midway point of the distance between a vertical central line of the box 4 and the transverse end of the bottom plate 39. In the present embodiment, the upright portion 62 of the washer is arranged at approximately the same distance as the outer supports 46 of the bearing housing.

The washer 54 protects the boss 41 of the bearing housing 35 and the bottom plate 39 of the gear box from damage by stones. More specifically, stones can get caught between the carrier 27 of the tines and the bottom plate 39 of the gear box 4. The driving force is such that the carrier continues to rotate, as a result of which the boss 41 of the bearing housing can evidence fractures or cracks immediately or in the long run. This may ultimately result in a destruction of the supporting construction of working member 5 and gearwheel 13 and consequently also in damage of the relevant gearwheel 13 and the adjacent gearwheels 13. A further possibility is that the bottom plate 39 is dented. This may cause the accurate connection to the rubber O-ring 58 to be disturbed, so that oil leakage will occur, which ultimately is also fatal for the mutual drive and the bearing of the gearwheels 13.

Further important functions of the washer 54 are to hold back dirt, to allow floating dust particles to settle and to render it difficult for dust and dirt to penetrate to as far as the oil seal ring 60. The space 64 between boss 41, bottom plate 39 and washer 54 has a function in reducing the speed of dust particles caused by whirlings produced by the working members 5. Near the interface between the flat portion and the obliquely upwardly extending portion, the washer 54 is provided with preferably more than one discharge aperture 65 (see Figure 10). The dust and dirt settled in the washer space 64 is removed by centrifugal force. A tight seal between the lower edge of the boss 41 and the washer 54 ensures that this dust settles still further near the oil seal ring, whilst the narrow upright edge near the interface between the thickened edge of the washer 54 and the inner wall of the boss 41 has for its effect that this dust and any possible dirt can only reach the oil seal ring 61 against the force of gravity. Deposited dust and dirt can be removed by centrifugal force from the space between the lower edge of the boss 41 and the washer 54.

A still further protection of the bearing construction from dust and dirt is obtained with the aid of a collar 66, which is tightly arranged about the upright portion of the washer 54 against the bottom plate 39 of the gear box. The collar 66 covers the narrow aperture between washer 54 and the bottom plate, so that passing earth and dust are halted in their motion and cannot penetrate via this aperture into the washer space 64. Penetration of the washer space 64 can now only occur against the force of gravity. Such a collar 66 has more particularly at the side which, relative to the direction of operative travel, is the leading side of the gear box 4 and more particularly in the region where the working members 5 at the leading side of the box 4 rotate towards each other, a function in counteracting wear of the bottom plate 39 of the gear box 4 due to the passing flow of earth. An advantageous embodiment of the machine is therefore already obtained when such a collar is provided in at least one of these locations.

Figure 3 shows an embodiment of the machine according to the invention, in which the said collar 66 is provided around the washer 54. Independently of the collar 66, this embodiment has a construction in which the lower spacer ring 53 bears on the upright edge 56 of the carrier 27. To that end, this edge is of a more robust structure. In this embodiment, the washer is locked with the aid of a locking pin 51.

In a still further embodiment, shown in Figure 4, the thickened portion 57 of the washer 54 extends to as far as the periphery of the shaft 12 and the upper side of the carrier 27 is perfectly flat. The washer is here, as is also the case in the embodiment shown in Figure 2, clamped between the carrier 27 and the spacer ring 53.

The invention is not limited to the features described in the foregoing, but also relates to all the details of the drawings, whether they have been described or not.

## Claims

1. A rotary harrow having transversely to the direction of operative travel a plurality of soil working members (5) which are rotatable about upwardly extending axes and include at least one carrier (27) with two tines (24) mounted thereon, each tine (24) being mounted by means of a bolt (25) and a nut, projections (26) being provided on the carrier on both sides of the bolt (25) for locking said tine (24) to the carrier (27), characterized in that in a cross-sectional view through the centre line of carrier the bolts (25) make an obtuse angle to one another which is opened in an upward direction, and the inner sides (27A) of the carrier (27) on which the nuts of the bolts (25) are pressing, are making a sharp angle to one another, opened in a downward direction.

2. A rotary harrow according to claim 1, wherein the contact surfaces by which the tines (24) are in contact with the carrier (27) encloses a sharp angle which is opened in a downward direction.

3. A rotary harrow according to claim 1 or 2, wherein the bolts (25) have heads which are able to press against surfaces of the bulging portions (28) of the tines (24) when mounted to the carrier (27), these surfaces making an angle to one another which is opened in a downward direction.

4. A rotary harrow according to one of the preceding claims, wherein the tines (24) have on the upper part of the bulging portion (28) a top surface which encloses a smaller angle with the bolt than the lower surface of the bulging portion (28) near the working part of the tine.

5. A rotary harrow according to one of the preceding claims, wherein the nuts at the inner side of the carrier (27) are provided with a cup-shaped envelope (29).
